Europäisches Patentamt

European Patent Office

Office européen des brevets

(19)

(11) Veröffentlichungsnummer: **0 052 154 B1**

(12) # EUROPÄISCHE PATENTSCHRIFT

(45) Veröffentlichungstag der Patentschrift:
16.05.84

(51) Int. Cl.³: **B 60 G 3/18**

(21) Anmeldenummer: **80107072.3**

(22) Anmeldetag: **14.11.80**

(54) Einzelradaufhängung für nicht gelenkte Räder von Kraftfahrzeugen, insbesondere von Personenkraftwagen.

(43) Veröffentlichungstag der Anmeldung:
26.05.82 Patentblatt 82/21

(45) Bekanntmachung des Hinweises auf die Patenterteilung:
16.05.84 Patentblatt 84/20

(84) Benannte Vertragsstaaten:
DE FR GB IT SE

(56) Entgegenhaltungen:
DE - A - 2 038 880
FR - A - 1 425 504
FR - A - 2 421 077

AUTOMOBILTECHNISCHE ZEITSCHRIFT, Band 73, Nr. 7, 1971 Stuttgart W. MATSCHINSKY "Zur Analyse und Synthese räumlicher Einzelradaufhängungen" Seiten 247 bis 254

(73) Patentinhaber: **BAYERISCHE MOTOREN WERKE Aktiengesellschaft, Postfach 40 02 40, D-8000 München 40 (DE)**

(72) Erfinder: **Kosak, Werner, Dipl.-Ing., Thomas-Schwarz-Strasse 43a, D-8060 Dachau (DE)**
Erfinder: **Matschinsky, Wolfgang, Dipl.-Ing., Korbinianplatz 9, D-8000 München 40 (DE)**

(74) Vertreter: **Dexheimer, Rolf, c/o Bayerische Motoren Werke Aktiengesellschaft Postfach 40 02 40, D-8000 München 40 (DE)**

### Einzelradaufhängung für nicht gelenkte Räder von Kraftfahrzeugen, insbesondere von Personenkraftwagen

Die Erfindung betrifft eine Einzelradaufhängung für nicht gelenkte Räder von Kraftfahrzeugen, insbesondere von Personenkraftwagen, der im Oberbegriff des Hauptanspruches angegebenen Bauart.

Eine derartige Einzelradaufhängung ist in der Fachzeitschrift »ATZ« 73 (1971) auf den Seiten 248–250 unter den sphärischen Radaufhängungen beschrieben. Hierbei sind an Entwurfsdaten unter anderem der Radsturz »γ«, die angestrebte Sturzänderung »$\Delta\gamma$« des Rades beim Einfedern sowie der Querpolabstand »q« genannt, der mit der gewünschten Sturzänderung »$\Delta\gamma$« in der Beziehung steht:

$$q = \frac{1}{\Delta\gamma}.$$

Aus dieser Beziehung folgt für eine kleine Sturzänderung »$\Delta\gamma$« über einen aus Komfortgründen relativ großen Federweg f (am Rad) ein verhältnismäßig großer Querpolabstand

$$q = \frac{f}{\Delta\gamma}$$

Der Zweck der Erfindung liegt darin, zwischen einem nach vorstehendem Zusammenhang resultierenden, relativ großen Querpolabstand und den Längen der im Oberbegriff des Hauptanspruches angeführten Ersatzlenker eine Beziehung herzustellen, nach der ein gewünschtes Eigenlenkverhalten des Rades der Einzelradaufhängung beim Federn erzielt ist.

Der Erfindung liegt die Aufgabe zugrunde, für eine Einzelradaufhängung nach dem Oberbegriff des Hauptanspruches mit einem im wesentlichen positiven Vorspurverhalten des Rades beim Ein- und Ausfedern eine einbaugünstige Anordnung von Längsarm und Querlenkern aufzuzeigen.

Diese Aufgabe ist mit den im Kennzeichen des Hauptanspruches angegebenen Mitteln gelöst.

Mit der Erfindung ist zum einen der Vorteil erreicht, daß bei einer angetriebenen oder nicht angetriebenen Hinterachse mit erfindungsgemäß einzeln aufgehängten Rädern vor den Radachsen bzw. Halbwellen ein großer Bauraum für einen unter dem Rücksitz unterzubringenden Tank sowie ein tief abgesenkter Kofferraumboden erzielt ist, und zum anderen der Vorteil eines günstigen Vorspurverhaltens beim Ein- und Ausfedern des Rades mit einer zur Verringerung der Reifenbelastung gewünscht kleinen Sturzänderung. Damit ist bei einer derartigen Hinterachse ein untersteuerndes bis neutrales Lenkverhalten erreicht.

Durch entsprechende Wahl der Querlenkerlängen von gleich langen Ersatzlenkern bis hin zu einem gegenüber dem unteren Ersatzlenker wesentlich kürzeren oberen Ersatzlenker kann in vorteilhafter Weise jede gewünschte positive Vorspurkurve erzielt sein, die weiter durch Wahl der Lage des Gelenkes relativ zur Radachse gekippt werden kann.

Weiter kann mit der Erfindung der Grenzfall erreicht sein, daß das Rad der erfindungsgemäßen Aufhängung beim Ein- und Ausfedern keine Vorspuränderung erfährt. Erreicht ist dies mit Ersatzlenkern von jeweils einer etwa dem halben Hilfsabstand entsprechenden Länge sowie einem auf einer — in Fahrtrichtung gesehen — durch den Querpol verlaufenden Parallelen zur Radachse angeordneten Gelenk des Längsarmes. Bei einer Anordnung des Längsarm-Gelenkes unterhalb der Radachse bei erfindungsgemäß nach hinten weisendem Längsarm ist weiter der Vorteil eines progressiven Anfahr-Nickausgleiches erzielt.

Mit der Ausgestaltung der Erfindung nach Anspruch 2 kann der Bereich des Fahrzeugbodens vor den Radachsen bzw. bei angetriebenen Rädern vor den Halbwellen optimal gestaltet werden.

Mit der weiteren Ausgestaltung der Erfindung nach Merkmalen des Anspruches 3 ist die untere Abstützung der Feder/Dämpfereinheit vorteilhaft tief angeordnet, so daß die Feder/Dämpfereinheit mit ihrem oberen Ende am Fahrzeugboden abgestützt werden kann. Damit sind schmale Radhäuser und ein relativ breiter Kofferraum ohne starke Zerklüftungen erzielt. Durch die erfindungsgemäße Beziehung der Längen der Querlenker zu den Längen ihrer Ersatzlenker kann hierbei der obere Querlenker platzsparend angeordnet werden.

Mit der Ausgestaltung nach Merkmalen des Anspruches 4 ist zusätzlich ein Bremsnickausgleich an der erfindungsgemäßen Einzelradaufhängung erreicht.

Die Erfindung ist anhand eines in der Zeichnung dargestellten Ausführungsbeispiels beschrieben.

Die Zeichnung zeigt eine Einzelradaufhängung nach der Erfindung in

Fig. 1 im Querriß,
Fig. 2 im Längsriß und in
Fig. 3 im Grundriß.

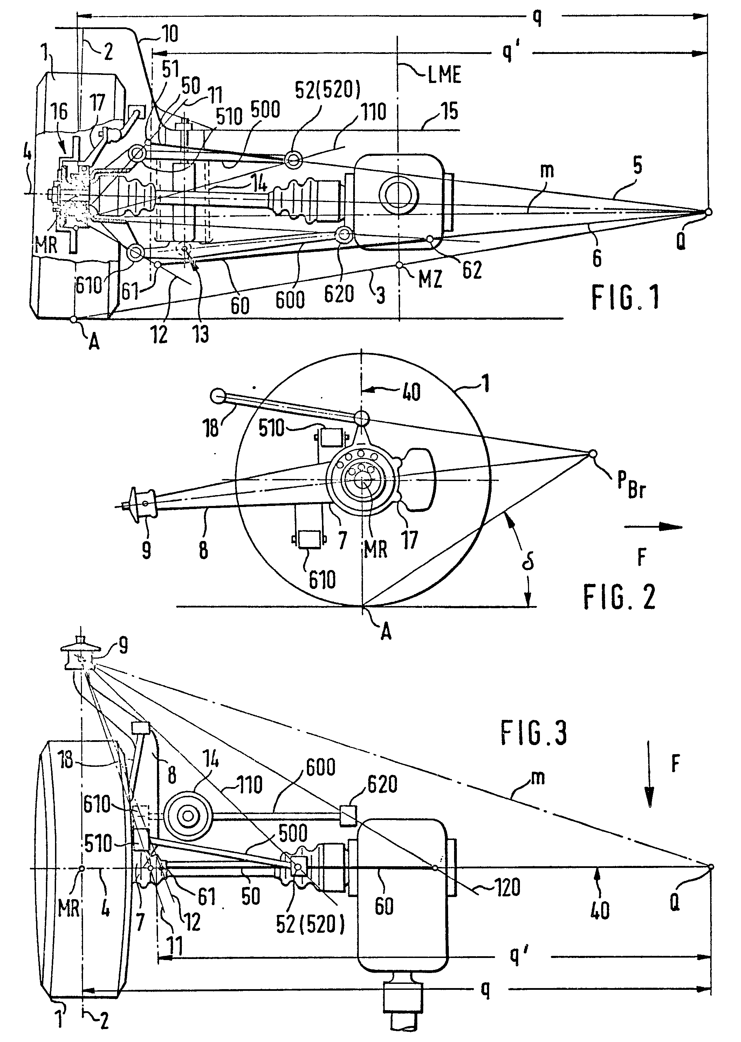

Im Querriß (Fig. 1) ist ein Rad 1 mit negativem Sturz (unmaßstäblich) gezeigt. Vom Aufstandspunkt A der Radmittenebene 2 des Rades 1 ist durch das in Fahrzeuglängsmittenebene LME in vorbestimmter Höhe eingezeichnete Momentanzentrum MZ eine Gerade 3 angeordnet, auf deren Verlängerung über MZ hinaus der Querpol Q liegt. Der Abstand q des Querpoles Q von der Radmittenebene 2 in Mitte Rad MR ist aus dem für eine Komfortfederung relativ großen, am Rad gemessenen Federweg f und einer gewünscht kleinen Sturzänderung $\Delta\gamma$ während der Federung

nach der Beziehung

$$q = \frac{f}{\Delta \gamma}.$$

ermittelt.

Aus Fig. 1 ist ein Abstand q ersichtlich, durch den der Querpol Q im Schnittpunkt der Geraden 3 mit der verlängerten Radachse 4 liegt. Durch diese Radachse 4 ist im Längs- und Grundriß eine Querebene 40 veranschaulicht, die durch Mitte Rad MR vertikal verläuft und in der der Querpol Q liegt. Im Grundriß sind vom Querpol Q aus etwa auf den Rand einer nicht gezeigten Radfelge des Rades 1 Strahlen 5 und 6 gerichtet. Auf dem oberen Strahl 5 ist ein Ersatzlenker 50 abgetragen und auf dem unteren Strahl 6 ein Ersatzlenker 60. Die Ersatzlenker 50 und 60 sind mit ihren radseitigen Anlenkungen 51 und 61 nahe dem Rad 1 bzw. der Radmittenebene 2 in einem vom Querpol Q aus festgelegten, gemittelten Hilfsabstand q' angeordnet. Der Hilfsabstand q' entspricht etwa dem Querpolabstand q, er kann bei anderer Gestaltung des Rades 1 aber auch größer sein. Der Ersatzlenker 50 ist kürzer als q'/2, während der Ersatzlenker 60 eine Länge von etwa q'/2 hat.

Das Rad steht mit einem Radträger 7 in Verbindung, der mit einem in Fahrzeuglängsrichtung angeordneten Längsarm 8 fest verbunden ist. Der Längsarm 8 steht über ein Gelenk 9 mit dem Fahrzeugaufbau 10 in gelenkiger Verbindung, wobei das Gelenk 9 — in Fahrtrichtung gemäß Pfeil »F« gesehen — hinter der Radachse 4 in der Radmittenebene 2 unterhalb Mitte Rad MR angeordnet ist.

Vom Gelenk 9 sind Strahlen 11 und 110 zu den in der Querebene 40 liegenden Anlenkungen 51 und 52 des oberen Ersatzlenkers 50 und Strahlen 12 und 120 zu den in der Querebene 40 liegenden Anlenkungen 61 und 62 des unteren Ersatzlenkers 60 angeordnet. Aus dem Grundriß (Fig. 3) geht hervor, daß den Radträger 7 in Fahrzeugquerrichtung am Fahrzeugaufbau 10 abstützende Querlenker 500 und 600 mit ihren radseitigen Anlenkungen 510 und 610 auf den entsprechenden Strahlen 11 und 12 mit ihren aufbauseitigen Anlenkungen 520 und 620 auf den entsprechenden Strahlen 110 und 120 angeordnet sind. Aus den Fig. 1 und 2 ist weiter zu entnehmen, daß der obere Querlenker 500 mit seiner radseitigen Anlenkung 510 oberhalb der Radachse 4 und der untere Querlenker 600 mit seiner radseitigen Anlenkung 610 unterhalb der Radachse 4 am Radträger 7 angeordnet ist.

Die Querlenker 500 und 600 sind — in Fahrtrichtung »F« gesehen — hinter der Querebene 40 bzw. der Radachse 4 und somit mit dem Gelenk 9 auf einer Seite der Radachse 4 bzw. der Querebene 40 angeordnet. Wie aus Fig. 3 ersichtlich, ist der untere Querlenker 600 parallel zur Radachse 4 angeordnet und weist nahe dem Radträger 7 eine Abstützung 13 für eine Feder/Dämpfereinheit 14 auf. Diese ist mit ihrem oberen Ende in einem ebenen Abschnitt des Fahrzeug- oder Kofferraumbodens 15 befestigt. Der obere Querlenker 500 ist von seiner radseitigen Anlenkung 510 aus zur Querebene 40 in Fahrtrichtung »F« schräg nach vorne an der Feder/Dämpfereinheit 14 vorbeigeführt, wobei die aufbauseitige Anlenkung 520 in der Querebene 40 liegt.

Aus dem Längsriß (Fig. 2) ist deutlich die Lage des Längsarm-Gelenkes 9 unterhalb Mitte Rad MR bzw. unterhalb der Radachse 4 ersichtlich. Mit der Anordnung des Gelenkes 9 ist ein Anfahrnickausgleich erreicht. Zur Erzielung eines Bremsnickausgleiches bei dem Rad 1 zugeordneter Bremseinrichtung 16 ist ein Bremswiderlager 17 am Radträger 7 konzentrisch zur Radachse 4 drehbeweglich angeordnet und — aus Fig. 2 ersichtlich — über eine in Fahrtrichtung »F« nach vorne unten geneigt angeordnete Stützstrebe 18 mit dem Fahrzeugaufbau 10 verbunden. Die Wirkungslinie der Stützstrebe 18 und die des Längsarmes 8 bzw. des Radträgers 7 schneiden sich im Bremspol $P_{Br}$, über den der Abstützwinkel $\delta$ um den Radaufstandpunkt A bestimmt ist.

Das Gelenk 9 ist als elastisches Lager ausgebildet. Um bei Längskraft (Brems- oder Antriebskraft) am Rad 1 ein elastisches Lenken des Rades 1 zu unterbinden, ist das Gelenk 9 in der Radmittenebene 2 angeordnet. Dies ermöglicht für eine Längsfederung des Rades 1 ein relativ weiches elastisches Lager.

Weiter kann das Gelenk 9 auch als ein elastisches Lager mit verschiedenen Federhärten in zueinander unterschiedlichen Richtungen ausgebildet sein, um bei gewünschter Längsfederung des Rades 1 ein gewünschtes Vorspurverhalten des Rades 1 bei Längs- oder Seitenkraft zu erzielen. Vorteilhaft ist ein solches Lager insbesondere bei außerhalb der Radmittenebene 2 vorgesehenem Gelenk 9, womit eine günstige elastokinematische Anlenkung der Einzelradaufhängung erreicht ist.

Zur Erzielung eines gewünschten Vorspurverhaltens des Rades 1 bei Längsfederung mit einem elastischen Lager für das Gelenk 9 nach der einen oder anderen vorbeschriebenen Art können beide Querlenker 500, 600 auch in Fahrtrichtung vor der Radachse 4 bzw. der Querebene 40 oder beiderseits angeordnet sein. Bei der Querlenkeranordnung nach dem vorbeschriebenen Ausführungsbeispiel und dem in der Radmittenebene 2 angeordneten Gelenk 9 mit einfachem, relativ weichelastischem Lager ergibt sich bei Seitenkraft am kurvenäußeren Rad 1 ein untersteuerndes elastisches Gegenlenken. Die Momentanachse m der Einzelradaufhängung ist eine durch Gelenk 9 und Querpol Q verlaufende Gerade.

## Patentansprüche

1. Einzelradaufhängung für nicht gelenkte Räder von Kraftfahrzeugen, insbesondere von Personenkraftwagen, mit einem Radträger (7),

— der über einen in Fahrzeuglängsrichtung angeordneten Längsarm (8) und

— in Fahrzeugquerrichtung mittels zweier, übereinander angeordneter Querlenker (500, 600) mit dem Fahrzeugaufbau (10) gelenkig verbunden ist, wobei

— die Querlenker (500, 600) in einer durch die Radmitte (MR) vertikal verlaufenden Querebene (40) Ersatzlenker (50, 60) bilden, deren

— zur Fahrzeugmitte gerichtete Verlängerungen sich in einem im Abstand (q) von der Radmittenebene liegenden Querpol schneiden,

dadurch gekennzeichnet,

— daß die Ersatzlenker (50, 60) mit ihren radseitigen Anlenkungen (51, 61) in einem vom Querpol (Q) aus festgelegten Hilfsabstand (q') im Bereich der Radmittenebene (2) vorgesehen sind, wobei

— die Querlenker (500, 600) jeweils einen Ersatzlenker von einer Länge kleiner oder etwa gleich dem halben Hilfsabstand ($\lesssim$ q'/2) bilden und

— der Längsarm (8) — in Fahrtrichtung »F« — nach hinten weisend angeordnet ist mit

— einem nahe der Radmittenebene (2) angeordneten Gelenk (9), das

— unterhalb Mitte Rad (MR) liegend gewählt ist.

2. Einzelradaufhängung nach Anspruch 1, dadurch gekennzeichnet, daß beide Querlenker (500, 600) — in Fahrtrichtung »F« gesehen — im wesentlichen hinter der Querebene (40) bzw. der Radachse (4) angeordnet sind.

3. Einzelradaufhängung nach Anspruch 2, dadurch gekennzeichnet,

— daß der untere Querlenker (600) — im Grundriß gesehen — im wesentlichen parallel zur Querebene (40) bzw. zur Radachse (4) angeordnet ist, und

— nahe dem Radträger (7) eine Abstützung (13) für eine Feder/Dämpfereinheit (14) aufweist, wobei

— der obere Querlenker (500) gegenüber dem unteren Querlenker kürzer ausgebildet und an der Feder/Dämpfereinheit radachsenseitig, schräg zur Querebene vorbeigeführt ist mit einer in der Querebene liegenden fahrzeugseitigen Anlenkung (520).

4. Einzelradaufhängung nach den Ansprüchen 1 bis 4, dadurch gekennzeichnet, daß ein Bremswiderlager (17) zur Radachse (4) konzentrisch am Radträger (7) drehbeweglich angeordnet und über eine in Fahrtrichtung »F« nach vorne unten geneigt angeordnete Stützstrebe (18) mit dem Fahrzeugaufbau (10) verbunden ist.

5. Einzelradaufhängung nach einem oder mehreren der Ansprüche, dadurch gekennzeichnet, daß der Hilfsabstand (q') etwa dem Querpolabstand (q) entspricht.

**Claims**

1. An individual wheel-suspension means for the unsteered wheels of motor vehicles, especially passenger motor vehicles, comprising a wheel carrier (7),

— which is linked to the vehicle structure (10) by a longitudinal arm (8) arranged in the direction of the longitudinal axis of the vehicle and

— in the transverse direction of the vehicle by means of two superposed transverse links (500, 600),

— the transverse links (500, 600) forming replacement links (50, 60) in a transverse plane (40) extending vertically through the wheel centre (MR), and

— extensions of the replacement links (50, 60) directed towards the middle of the vehicle intersecting each other at a transverse pole lying at a distance (q) from the plane of the wheel-centre,

characterized in

— that the replacement links (50, 60) are provided in the region of the plane (2) of the wheel-centre with their wheel-side couplings (51, 61) at an additional distance (q') from the transverse pole (Q), and

— the transverse links (500, 600) each from an additional link having a length less than or substantially equal to one-half of the additional distance ($\lesssim$ q'/2), and

— the longitudinal arm (8) — in the direction of travel »F« —

— is arranged to extend rearwardly with

— a joint arranged near the plane (2) of the wheel-centre, which joint

— preferably lies below the wheel-centre (MR).

2. An individual wheel-suspension means according to claim 1, characterized in that the two transverse links (500, 600) — seen in the direction of travel »F« — are arranged substantially to the rear of the transverse plane (40), i. e. of the wheel-axis (4).

3. An individual wheel-suspension means according to claim 2, characterized in

— that the lower transverse link (600) — as seen in plan view — is arranged substantially parallel to the transverse plane (40), i. e. to the wheel axis (4), and

— has, near the wheel carrier (7), a backing means (13) for a spring/absorber unit (14), and

— the upper transverse link (500) is shorter than the lower transverse link, and a coupling (520) at the vehicle side which is disposed in the transverse plane extends past it at the spring/shock absorber unit on the wheel-axis side and at an angle to the transverse plane.

4. An individual wheel-suspension means according to claims 1 to 4, characterized in that a brake backing means (17) is rotatably arranged on the wheel carrier (7) concentrically with the wheel axis (4) and is connected to the vehicle structure (10) by a support strut (18) which is forwardly and downwardly inclined in the direction of travel »F«.

5. An individual wheel-suspension means according to any one or more of the preceding claims, characterized in that the additional distance (q') corresponds substantially to the transverse pole distance (q).

## Revendications

1. Suspension indépendante pour roues non directrices de véhicules à moteur, en particulier de voitures automobiles, comportant un support de roue (7),

—　qui est relié de façon articulée au châssis (10) du véhicule par l'intermédiaire d'un bras longitudinal (8) disposé dans la direction longitudinale du véhicule et,

—　dans la direction transversale du véhicule par l'intermédiaire de deux bras transversaux (500, 600) disposés l'un au-dessus de l'autre,

—　les bras transversaux (500, 600) formant des bras auxiliaires (50, 60) dans un plan transversal (40) passant verticalement par le milieu de roue (MR), bras dont:

—　les prolongements dirigés vers le milieu du véhicule se coupent en un pôle transversal à une distance q du plan médian de roue,

caractérisée en ce que:

—　les articulations (51, 61) situées du côté de la roue, des bras auxiliaires (50, 60) sont prévues dans la zone du plan médian de roue (2) à une distance auxiliaire (q') fixe du pôle transversal (Q), et

—　les bras oscillants transversaux (500, 600) forment chaque fois un bras auxiliaire d'une longueur inférieure ou sensiblement égale à la moitié de la distance auxiliaire ($\lesssim$ q'/2), et

—　le bras longitudinal (8) est dirigé vers l'arrière dans le sens de déplacement »F«, avec

—　une articulation (9) prévue au voisinage du plan médian de roue (2), et qui

—　est située sélectivement en-dessous du milieu de roue (MR).

2. Suspension indépendante du roues selon la revendication 1, caractérisé en ce que les deux bras oscillants transversaux (500, 600) sont essentiellement placés derrière le plan transversal (40) ou l'axe de roue (4) vu dans la direction de déplacement (F).

3. Suspension indépendante pour roues selon la revendication 2, caractérisé en ce que:

—　le bras oscillant transversal inférieur (600) — vu en plan — est disposé essentiellement parallèlement au plan transversal (40) ou à l'axe de roue (4), et

—　comporte au voisinage du support de roue (7), un appui (13) pour un ensemble ressort/amortisseur (14), et

—　le bras oscillant transversal supérieur (500) est plus court que le bras oscillant transversal inférieur et passe à côté de l'ensemble ressort/amortisseur, du côté de la roue, de façon inclinée par rapport au plan transversal, avec une articulation (520) du côté du véhicule, articulation située dans le plan transversal.

4. Suspension indépendante de roues selon l'une quelconque des revendications 1 à 4, caractérisé par un appui de frein (17) monté mobile en rotation sur le support de roue (7), concentriquement à l'axe de roue (4), et relié au châssis (10) du véhicule par une entretoise d'appui (18) dirigée vers l'avant et vers le bas dans la direction de déplacement (F).

5. Suspension indépendante pour roues selon l'une ou plusieurs des revendications, caractérisé en ce que la distance auxiliaire (q') correspond sensiblement à la distance polaire transversale (q).

FIG. 1

FIG. 2

FIG. 3